# EUROPÄISCHE PATENTSCHRIFT

(11) **EP 3 667 148 B1**
(45) Veröffentlichungstag und Bekanntmachung des Hinweises auf die Patenterteilung: **19.10.2022**
(21) Anmeldenummer: 19163711.5
(22) Anmeldetag: 19.03.2019
(51) Int. Cl.: F16L 51/02, F16L 51/00

(54) **LÄNGENKOMPENSATOR**
LENGTH COMPENSATOR
COMPENSATEUR DE LONGUEUR

(30) Priorität: 13.12.2018 EP 18212137
(43) Veröffentlichungstag der Anmeldung: 17.06.2020
(73) Patentinhaber: Georg Fischer Rohrleitungssysteme AG, 8201 Schaffhausen (CH)
(72) Erfinder: Schmid, Lenz, 79798 Jestetten (DE); Rösch, Jürgen, 79853 Lenzkirch (DE); Reiz, Robert, 79780 Stühlingen (DE); Breyer, Markus, 78315 Radolfzell (DE)
(74) Vertreter: Fenner, Seraina

(56) Entgegenhaltungen:
- DE-A1- 2 542 644
- DE-A1-102007 043 944
- DE-U- 7 325 208
- GB-A- 1 246 055
- US-A1- 2015 273 756

## Beschreibung

Die Erfindung betrifft einen Längenkompensator für Rohrleitungen, vorzugsweise Kunststoffrohrleitungen beinhaltend zwei Anschlusskomponenten aus Kunststoff, ein Ausgleichselement aus einem elastischen Material und ein Stützrohr, wobei das Ausgleichselement zwischen den beiden Anschlusskomponenten angeordnet ist und die Ausgleichselementenden mit den Anschlusskomponenten verbunden sind.

Längenkompensatoren dienen der Aufnahme bzw. der Kompensation der Längenveränderung einer installierten Rohrleitung durch beispielsweise Temperaturveränderungen oder äussere Einflüsse wie Kräfte durch Erdbeben Pumpenstösse usw.. Die Länge einer Rohrleitung verändert sich in Abhängigkeit der Temperatur, sei es aufgrund der Aussentemperatur oder der Mediumstemperatur des in der Rohrleitung transportierten Mediums. Diese Längenveränderung, sei es eine Ausdehnung oder ein Zusammenziehen, gilt es aufzunehmen. Aus dem Stand der Technik sind beispielsweise Rohrschlaufen bekannt, die durch ihre Umlenkungen der Rohrleitung eine gewisse Längenveränderung zulassen bzw. aufnehmen. Des Weiteren sind aus dem Stand der Technik auch Faltenbälge oder Gummimuffen wie auch axial ineinander verschiebbare Rohre bekannt.

Das deutsche Gebrauchsmuster 7325208 offenbart einen Dehnungsausgleicher für Rohrleitungen, wobei der Dehnungskörper in einem Gehäuse angeordnet ist, das

eine ovale Querschnittsform aufweist in der sich der Dehnungskörper entsprechend auch waagrecht bewegen kann.

Das Dokument US 2015/273756 A1 offenbart ein Verfahren zur Herstellung eines Dehnungskompensators, wobei das Verfahren umfasst: (a) das Bereitstellen einer inneren Kunststoffauskleidung mit einem ersten und einem zweiten Ende, die voneinander beabstandet sind, einer inneren Oberfläche, einer äußeren Oberfläche und einem Innenvolumen, das sich von dem ersten Ende zu dem zweiten Ende erstreckt; (b) das Positionieren der inneren Kunststoffauskleidung im Inneren einer länglichen Metallleitung, wobei die längliche Metallleitung ein erstes und ein zweites beabstandetes Ende, eine Innenfläche, eine Außenfläche und einen Expansions-/Kontraktionsabschnitt aufweist; (c) das Aufbringen von Druck auf ein Fluid, das sich in dem Innenvolumen der inneren Kunststoffauskleidung befindet, während die innere Kunststoffauskleidung bei oder über einer Formgebungstemperatur ist, um die innere Kunststoffauskleidung zu expandieren, wodurch die expandierte innere Kunststoffauskleidung einen Expansions-/Kontraktionsabschnitt aufweist; und (d) das Abkühlen der inneren Kunststoffauskleidung auf eine Temperatur unterhalb der Formgebungstemperatur. Der Dehnungskompensator kann mit einer Hülse versehen sein. Die Hülse kann den gesamten Dehnungs-/Kontraktionsabschnitt überdecken. Verbinder können an den gegenüberliegenden Enden des Metallrohrs und der Kunststoffauskleidung vorgesehen werden. Die Verbinder können durch Umspritzen von Teilen des Verbinders auf die Enden des Metallrohrs und der inneren Kunststoffauskleidung gebildet werden. Alternativ können Verbindungsabschnitte der Verbinder an die innere Kunststoffauskleidung z.B. durch Schweißen befestigt werden.

Die oben aufgeführten Lösungen bringen die Nachteile mit sich, dass sie einen hohen Platzbedarf benötigen, nur einen geringen Kompensationsweg aufweisen und/oder keinen hohen Innendruck zulassen bzw. nicht denselben Innendruck zulassen wie die Rohrleitung selbst.

Es ist Aufgabe der Erfindung einen Längenkompensator für Rohrleitungen vorzuschlagen, der einen langen Kompensationsweg zulässt und demselben Innendruck stand hält wie die Rohrleitung selbst. Zudem soll die Aussenmantelfläche des Ausgleichselementes einen geringen Reibungswiderstand aufweisen um eine einfache Längenveränderung des Längenkompensators zu ermöglichen.

Diese Aufgabe wird erfindungsgemäss durch einen Längenkompensator nach Anspruch 1 gelöst.

Die Aussenmantelfläche des Ausgleichselementes ist am gesamten Umfang von der Innenmantelfläche des Stützrohres passend umfasst, wobei das Stützrohr eine runde Querschnittsfläche aufweist und das Ausgleichselement sich ausschliesslich in axialer Richtung ausdehnt und zusammenzieht.

Die runde Querschnittsfläche des Stützrohres erstreckt sich vorzugsweise über die komplette Länge des Stützrohres, wobei die Querschnittsfläche vorzugsweise über die gesamte Länge konstant ist.

Der erfindungsgemässe Längenkompensator für Rohrleitungen, vorzugsweise Kunststoffrohrleitungen, beinhaltet zwei Anschlusskomponenten aus Kunststoff. Die Anschlusskomponenten sind koaxial zueinander ausgerichtet und weisen vorzugsweise denselben Innen- und Aussendurchmesser auf. Des Weiteren weist der Längenkompensator ein Ausgleichselement aus einem elastischen Material aus einem thermoplastischem Elastomer (TPE) auf, wobei das Ausgleichselement durch einen einfachen elastischen Schlauch oder ein Rohr gebildet sein kann wie auch durch ein speziell dafür entwickeltes Element, das die Längenveränderung einer Rohrleitung aufnimmt. Der Längenkompensator weist ebenso ein Stützrohr auf indem das Ausgleichselement angeordnet ist. Das Ausgleichselement ist zwischen den beiden Anschlusskomponenten angeordnet. Das Ausgleichselement bzw. die Ausgleichselementenden sind mit den Anschlusskomponenten verbunden. Die Aussenmantelfläche des Ausgleichselementes ist am gesamten Umfang von der Innenmantelfläche des Stützrohres passend umfasst, das heisst, das Ausgleichselement ist vorzugsweise konzentrisch im Stützrohr angeordnet. Durch diese Anordnung und Formgestaltung des Ausgleichselements und des Stützrohres kann sich das Ausgleichselement ausschliesslich in axialer Richtung ausdehnen und zusammenziehen. Dadurch, dass das Stützrohr das Ausgleichselement bzw. dessen Umfang umgibt wird der Innendruck vom Stützrohr aufgenommen und das Ausgleichselement nicht überbeansprucht da es vom Stützrohr gestützt wird. Vorzugsweise sind auch die Anschlusskomponenten zumindest teilweise vom Stützrohr umfasst bzw. im Stützrohr angeordnet, dies dient der Führung der Anschlusskomponenten. Es ist vorteilhaft wenn auch die Anschlusskomponenten konzentrisch im oder am Stützrohr angeordnet sind.

Vorzugsweise ist eine Anschlusskomponente axial am bzw. mit dem Stützrohr fixiert, wodurch die Längenveränderung durch die Verschiebung der anderen Anschlusskomponente und dem Zusammenziehen oder Ausdehnen des Ausgleichselements eingestellt wird.

Vorzugsweise sind die Anschlusskomponenten aus Polyethylen (PE) hergestellt, aber auch Polypropylen (PP), Polybuten (PB), Polyvinylidenfluorid (PVDF), Polyvinylchlorid (PVC), Acrylnitril-Butadien-Styrol (ABS) oder Ethylene ChloroTriFluoroEthylene (ECTFE) sowie andere typische Rohrleitungswerkstoffe aus Kunststoff können eingesetzt werden.

Erfindungsgemäss sind die Anschlusskomponenten mit dem jeweiligen Ausgleichselementende mittels einer stoffschlüssigen Verbindung und zwar mittels einer Stumpfschweissung, speziell bevorzugt mit einer WNF-Schweissung, einer Muffenschweissung, oder einer Elektromuffenschweissung verbunden. Wobei eine Schweissung mittels Kontaktschweissung wie auch einem berührungslosen Schweissverfahren vorzugsweise IR-Schweissen durchgeführt werden kann.

Alternativ können erfindungsgemäss die Anschlusskomponenten und das Ausgleichselement im Zweikomponentenspritzgiessen miteinander verbunden werden und jeweils an den Ausgleichselementenden ist eine Anschlusskomponente mittels Kunststoffspritzgiessen angeform. Dies gewährleistet eine wirtschaftliche Herstellung des erfindungsgemässen Längenkompensators sowie auch die Dichtheit zwischen dem Ausgleichselement und den Anschlusskomponenten.

Es ist vorteilhaft, wenn die jeweilige Stirnseite der Anschlusskomponenten mit dem jeweiligen Ausgleichselementende verbunden ist. Dies ermöglicht eine einfache, stabile und vor allem auch dichte Verbindung zwischen dem Ausgleichselement und der Anschlusskomponente.

Zusätzlich besteht die Möglichkeit, dass die Anschlusskomponenten mit dem jeweiligen Ausgleichselementende mittels einer formschlüssigen und/oder kraftschlüssigen Verbindung verbunden sind.

Vorzugsweise weist das Ausgleichselement denselben Innendurchmesser auf wie die Anschlusskomponenten, dies gewährleistet einen geringen Strömungswiderstand am Innendurchmesser was dem Medium und dem Minimieren von Verunreinigungen welche sich an hervorstehenden Kanten und Ecken ansammeln entgegenkommt. Gemäss einer bevorzugten Ausführungsform weist der erfindungsgemässe Längenkompensator eine reibungsreduzierende Schicht auf, vorzugsweise ist die reibungsreduzierende Schicht an der Aussenmantelfläche des Ausgleichselementes angeordnet. Dies gewährleistet einen geringen Widerstand, wodurch sich die Längenveränderung der Rohrleitung im Längenkompensator leicht einstellt bzw. dort aufgenommen wird. Zudem wird dadurch gewährleistet, dass der Längenkompensator den geringsten Widerstand in der Rohleitung darstellt und die Lageveränderung dort kompensiert wird damit sich die Rohrleitung nicht verbiegt oder sich sonst ungewollt verschiebt.

Zudem ist es vorteilhaft wenn auch die Anschlusskomponenten an deren Aussenmantelfläche eine reibungsreduzierende Schicht aufweisen, analog den Schichten die beim Stützrohr oder Ausgleichselement angewandt werden.

Vorzugsweise ist das Stützrohr aus einem Kunststoff hergestellt, speziell bevorzugt ist POM, PE-UHMW, PTFE, MoS₂ Polyethylen (PE), Polypropylen (PP), Polybuten (PB), Polyvinylidenfluorid (PVDF), Polyvinylchlorid (PVC), Acrylnitril-Butadien-Styrol (ABS) oder Ethylene ChloroTriFluoroEthylene (ECTFE) diese Kunststoffe weisen gute Trockenschmiereigenschaften auf.

Es hat sich als vorteilhaft gezeigt, wenn die reibungsreduzierende Schicht durch ein Fett oder Öl insbesondere PTFE oder Silikon gebildet ist. Dies ist einfach und schnell am Längenkompensator bzw. an der entsprechenden Mantelfläche aufzutragen und senkt den Reibungswiderstand zwischen Ausgleichselement und Stützrohr wesentlich.

Als alternative Ausgestaltung hat sich gezeigt, wenn die reibungsreduzierende Schicht durch eine Trockenschmierung insbesondere einer Beschichtung der Innenmantelfläche des Stützrohres vorzugsweise durch einen Gleitlack oder eine Metallbeschichtung gebildet ist. Dies ermöglicht einen wartungsfreien Einsatz des Längenkompensators.

Eine bevorzugte Ausführungsform des erfindungsgemässen Längenkompensators besteht darin, dass die reibungsreduzierende Schicht durch Ringe oder ein Gewebe gebildet ist, wobei die reibungsreduzierende Schicht die Aussenmantelfläche des Ausgleichselements bildet. Es ist vorteilhaft wenn die Ringe oder das Gewebe koaxial zum Ausgleichselement wie auch zum Stützrohr angeordnet sind und passend zwischen Ausgleichselement und Stützrohr liegt.

Der erfindungsgemässe Längskompensator weist vorzugsweise ein Anschlagelement auf, wobei das Anschlagelement am einen Ende des Stützrohres angeordnet ist. Das Anschlagelement dient dazu, dass der Längenkompensator bzw. das Ausgleichselement nicht überdehnt wird und nur eine maximale Ausdehnung zugelassen ist. Obwohl das Ausgleichselement mit den Anschlusskomponenten dicht verbunden ist, weist das Anschlagselement vorzugsweise eine Dichtung auf die nochmals die Dichtheit des Langenkompensators gewährleistet und vor Schmutzeintrag von aussen schützt.

Als weitere Ausgestaltungsmöglichkeit hat sich gezeigt, wenn das Stützrohr von einer Isolationsschicht umfasst ist. Dies bringt vor allem den Vorteil bei isolierten oder vorisolierten Rohrleitungssystemen, dass der in die Rohrleitung eingebaute Längenkompensator auch eine Isolationsschicht aufweist und nicht noch separat isoliert werden muss. Dadurch, dass das Stützrohr sich nicht verändert und die Kompensation sich im Inneren des Stützrohres abspielt kann am Aussenumfang des Stützrohres eine Isolationsschicht angebracht werden oder auch andere Schichten, Abdeckungen oder Befestigungen vorgesehen werden können.

Ausführungsbeispiele der Erfindung werden anhand der Figuren beschrieben, wobei sich die Erfindung nicht nur auf die Ausführungsbeispiele beschränkt. Es zeigen:
- Fig. 1: einen Längsschnitt durch einen erfindungsgemässen Längenkompensator mit stoffschlüssiger Verbindung an den Stirnseiten der Anschlusskomponenten,
- Fig. 2: einen Längsschnitt durch einen erfindungsgemässen Längenkompensator mit Isolationsschicht,
- Fig. 3: einen Längsschnitt durch einen nicht unter den Schutzumfang der Ansprüche fallenden Längenkompensator mit form- und kraftschlüssiger Verbindung zwischen Ausgleichselement und Anschlusskomponenten,
- Fig. 4: einen Längsschnitt durch einen erfindungsgemässen Längenkompensator mit einem erfindungsgemässen Ausgleichselement,
- Fig. 5: einen Längsschnitt eines Ausgleichselements für einen Längenkompensator und
- Fig. 6: ein zylinderförmiger Hohlkörper eines Ausgleichselements.

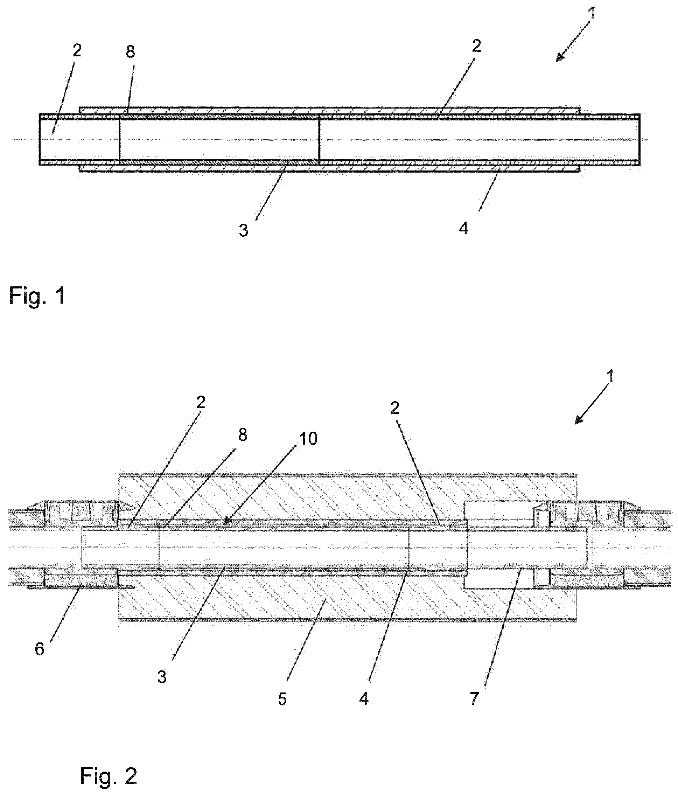

Die in Fig. 1 dargestellte Zeichnung zeigt einen erfindungsgemässen Längenkompensator 1 in einer möglichen Ausführungsform im Längsschnitt. Der Längenkompensator 1 dient der Aufnahme bzw. dem Ausgleich der Längenveränderung einer Rohrleitung, welche durch beispielsweise Temperaturveränderungen entstehen. Der Längenkompensator 1 weist zwei Anschlusskomponenten 2 auf, die zwischen den sich gegenüberliegenden freien Enden einer Rohrleitung befestigt werden. Die beiden sich gegenüberliegenden Stirnseiten der Anschlusskomponenten 2 im Stützrohr 4 sind mittels eines Ausgleichselementes 3 an den Ausgleichselementenden 8 miteinander verbunden, wobei auch alternative Verbindungsmöglichkeiten denkbar sind. Die Verbindungen sind vorzugsweise untrennbar und werden beispielsweise durch einen Stoffschluss, wie einer Schweissung oder mittels Spritzgussverfahren hergestellt, das gewährleistet, dass die Verbindung dicht ist.

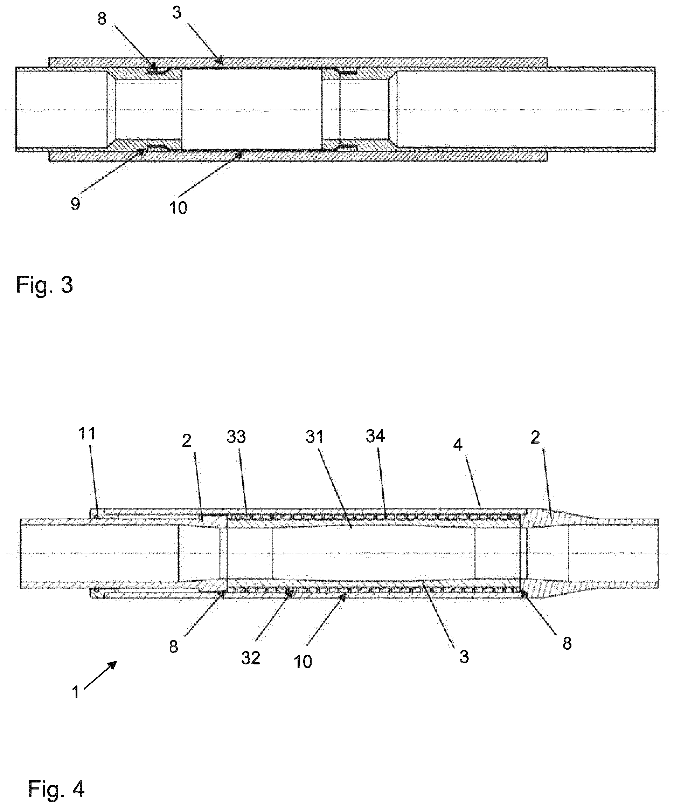

Beispielsweise durch Zweikomponentenspritzgiessen werden die Ausgleichselementenden 8 umspritzt und die Anschlusskomponenten 2 ausgebildet, wobei auch andere Verbindungsarten denkbar sind wie form- und/oder kraftschlüssige Verbindungen, wie in Fig. 3 dargestellt. Das Ausgleichselement 3 wird vom Stützrohr 4 umgeben wie auch die Anschlusskomponente 2 zumindest teilweise vom Stützrohr 4 umgeben sind. Dadurch, dass das Ausgleichselement 3 vom Stützrohr 4 passend umgeben ist, dient es zu dessen Abstützung und nimmt den Innenduck auf, der durch das Medium erzeugt wird. Aufgrund des umgebenden Stützrohres 4 kann sich das Ausgleichselement 3 nicht radial ausdehnen. Das Ausgleichselement 3 dehnt wie auch zieht sich nur in axialer Richtung aus oder zusammen, wodurch die Längenveränderung der Rohrleitung ausgeglichen wird und dennoch auch der Längenkompensator 1 dem geforderten Innendruck gemäss Rohrleitungsspezifikation standhält.

Als eine weitere Ausführungsform zeigt Fig. 2 einen isolierten Längenkompensator 1. Auch hier ist wiederum gut ersichtlich, dass das Stützrohr 4 den Ausgleichselement 3 passend umfasst und eine Ausdehnung wie ein Zusammenziehen nur in axialer Richtung möglich ist. In dieser abgebildeten Ausführungsform ist am Aussenumfang des Stützrohres 4 eine Isolationsschicht 5 angeordnet, diese mögliche Ausgestaltungsform wird bei isolierten Rohrleitungssystemen angewandt und gewährleistet neben der Längenkompensation des Rohrleitungssystems der rasche Einbau ohne nachträglich noch eine separate Isolierung am Längenkompensator anzubringen.

Zudem ist in Fig. 2 auch eine mögliche Verbindung vom Längenkompensator 1 bzw. den Anschlusskomponenten 2 zur Rohrleitung aufgezeigt, wobei dies auch für Längenkompensatoren ohne Isolationsschicht so umsetzbar ist. Als Beispiel wird an einer Anschlusskomponente 2 direkt eine Kupplung 6 angebracht, wobei diese hier als Elektroschweissmuffe ausgebildet ist aber auch andere Kupplungen denkbar sind. Die Elektroschweissmuffe wird direkt auf der einen Seite mit der Anschlusskomponente 2 verschweisst und auf der anderen Seite mit der Rohrleitung. Als alternatives Beispiel ist auf der anderen Seite des Längenkompensators 1 die Anschlusskomponente 2 mit einem Anschlussstück 7 stirnseitig verschweisst, vorzugsweise mittels WNF-Schweissung oder eine andere stoffschlüssige Verbindungstechnik. Und dieses Anschlussstück 7 ist dann wiederum mit einer Kupplung 6, hier auch wieder eine Elektroschweissmuffe 6 verbunden. Dies ist nur eine beispielhafte Darstellung es gibt noch weitere Möglichkeiten wie die Anschlusskomponenten 2 mit der Rohrleitung verbunden werden kann.

In Fig. 3 ist eine alternative Ausführungsform eines Längenkompensators 1 dargestellt. Bei der dargestellten Ausführung sind die Ausgleichselementenden 8 mittels einer form- und kraftschlüssigen Verbindung 9 an den Anschlusskomponenten 2 befestigt. Wobei dazu in Fig. 3 eine Klemmung verwendet wird, jedoch können dazu auch andere bekannte Verbindungstechniken eingesetzt werden.

Fig. 4 zeigt einen erfindungsgemässen Längenkompensator 1 mit einem erfindungsgemässen Ausgleichselement 3. Der Längenkompensator 1 weist wie auch bei den anderen Ausführungsformen in denen ein blosser Schlauch als Ausgleichselement eingesetzt wird, an den beiden Ausgleichselementenden 8 jeweils eine Anschlusskomponente 2 auf, die wie bereits erwähnt über einen Stoff-, Form- und/oder Kraftschluss verbunden sind. Vorzugsweise ist eine der Anschlusskomponenten 2 fest mit dem Stützrohr 4 bzw. axial mit dem Stützrohr 4 fixiert, so dass sich der Längenkompensator 1 bzw. die Anschlusskomponente 2 nur auf einer Seite axial verschiebt. Um die axiale Ausdehnung zu begrenzen, weist der Längenkompensator 1 auf der gegenüberliegenden Seite der am Stützrohr 4 fixierten Anschlusskomponente 2 ein Anschlagselement 11 auf.

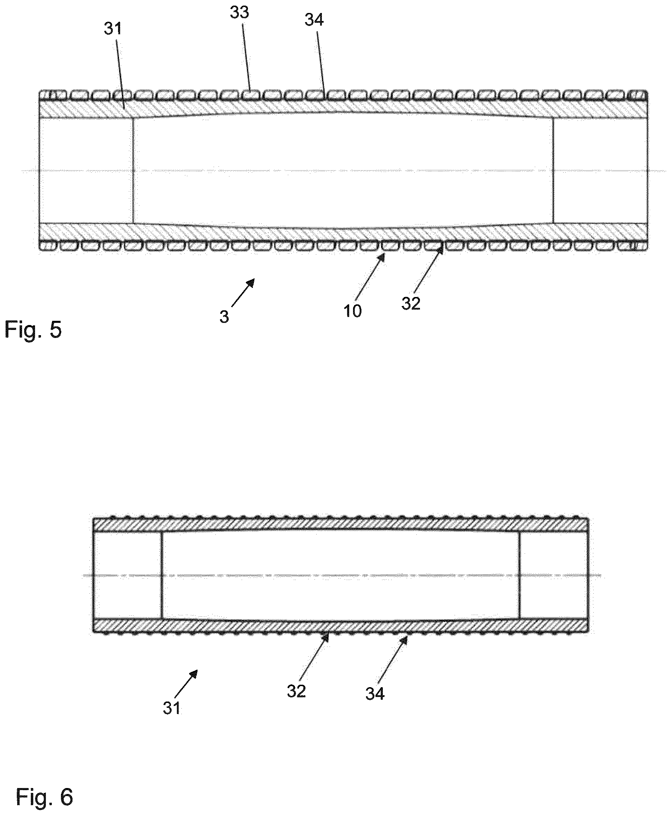

In Fig. 5 ist das Ausgleichselement 3 separat dargestellt. Ersichtlich ist der innenliegende zylinderförmige Hohlkörper 31, welcher vorzugsweise aus einem elastischen Material vorzugsweise einem Kunststoff hergestellt ist. An dessen äusserer Mantelfläche 32 ist ein spiralförmiges Element 33 angeordnet, welches durch seine äussere Mantelfläche eine reibreduzierende Schicht, um einen möglichst geringen Widerstand gegenüber der inneren Mantelfläche des Stützrohres aufzuweisen, bildet. Das spiralförmige Element 33 ist vorzugsweise aus einem Kunststoff hergestellt. Zur definierten Anordnung auf dem innenliegenden zylinderförmigen Hohlkörper 31 weist dieser an dessen äusserer Mantelfläche 32 eine Profilierung 34 auf. Dadurch kann sich das spiralförmige Element 33, welches zwischen der Profilierung angeordnet ist in seiner Anordnung nicht verschieben und es ist eine gleichmässige Ausdehnung des Ausgleichselements 3 gewährleistet. Die Profilierung 34 ist vorzugsweise als spiralförmig verlaufender Steg entlang der äusseren Mantelfläche 32 des zylinderförmigen Hohlkörpers 31 ausgebildet.

Vorzugsweise weist der zylinderförmige Hohlkörper 31 gegen die Stirnflächen hin eine Wandstärkenzunahme auf. Dies gewährleistet eine breitere Verteilung der bei Zug auftretenden Spannung und sorgt dafür, dass eine höher belastbare Verbindung zwischen dem Ausgleichselement bzw. dem zylinderförmigen Hohlkörper 31 und den Anschlusskomponenten 2 besteht. In Fig. 6 ist der zylinderförmige Hohlkörper 31 separat dargestellt.

Das Ausgleichselement 3 kann durch die separate Herstellung des zylinderförmigen Hohlkörpers 31 und die separate Herstellung des spiralförmigen Elements 33 und eine anschliessende Montage, indem das spiralförmige Element 33 auf den zylinderförmigen Hohlkörper 31 montiert bzw. aufgeschraubt wird hergestellt werden oder aber durch ein Zweikomponentenspritzgiessen, indem der zylinderförmige Hohlkörper 31 und das spiralförmige Element 33 zusammen gespitzt werden und dadurch ein Montagevorgang der beiden Komponenten eingespart werden kann. Durch das Herstellen im Zweikomponentenspritzgussverfahren kann auch zwischen den beiden Komponenten neben einem Form- und Kraftschluss auch ein Stoffschluss entstehen.

### Bezugszeichenliste

- 1: Längenkompensator
- 2: Anschlusskomponente
- 3: Ausgleichselement
- 4: Stützrohr
- 5: Isolationsschicht
- 6: Kupplung / Elektroschweissmuffe
- 7: Anschlussstück
- 8: Ausgleichselementende
- 9: Form- und/oder kraftschlüssige Verbindung
- 10: Aussenmantelfläche Ausgleichselement
- 11: Anschlagelement

- 31: Zylinderförmiger Hohlkörper
- 32: Äussere Mantelfläche des zylinderförmigen Hohlkörpers
- 33: Spiralförmiges Element
- 34: Profilierung / spiralförmig verlaufender Steg

## Patentansprüche

1. Längenkompensator (1) für Rohrleitungen, vorzugsweise
Kunststoffrohrleitungen, beinhaltend zwei Anschlusskomponenten (2) aus
Kunststoff, ein Ausgleichselement (3) aus einem elastischem Material aus einem thermoplastischem Elastomer (TPE), und ein Stützrohr (4), wobei das Ausgleichselement (3) zwischen den beiden Anschlusskomponenten (2) angeordnet ist und die Ausgleichselementenden (8) mit den Anschlusskomponenten (2) verbunden sind, wobei die Aussenmantelfläche des Ausgleichselementes (3) am gesamten Umfang von der Innenmantelfläche des Stützrohres (4) passend umfasst ist, wobei das Stützrohr (4) eine runde Querschnittsfläche aufweist und das Ausgleichselement (3) sich ausschliesslich in axialer Richtung ausdehnt und zusammenzieht,
wobei die Anschlusskomponenten (2) mit dem jeweiligen Ausgleichselementende (8) mittels einer stoffschlüssigen Verbindung und zwar mittels einer Stumpfschweissung, speziell bevorzugt mit einer WNF-Schweissung, einer Muffenschweissung, oder einer Elektromuffenschweissung verbunden ist,
oder
wobei die Anschlusskomponenten (2) und das Ausgleichselement im Zweikomponentenspritzgiessen miteinander verbunden werden und jeweils an den Enden des Ausgleichselements (3) eine Anschlusskomponente angespritzt ist.

2. Längenkompensator (1) nach Anspruch 1, **dadurch**
**gekennzeichnet, dass** die Anschlusskomponenten (2) mit dem jeweiligen Ausgleichselementende (8) mittels einer formschlüssigen und/oder kraftschlüssigen Verbindung verbunden sind.

3. Längenkompensator (1) nach einem der vorangehenden Ansprüche, **dadurch gekennzeichnet, dass** eine reibungsreduzierende Schicht an der Aussenmantelfläche des Ausgleichselements (3) angeordnet ist, vorzugsweise ist die reibungsreduzierende Schicht durch ein Fett oder Öl insbesondere PTFE oder Silikon gebildet.

4. Längenkompensator (1) nach Anspruch 3, **dadurch gekennzeichnet, dass** die reibungsreduzierende Schicht durch eine Trockenschmierung insbesondere einer Beschichtung der Innenmantelfläche des Stützrohres (4) vorzugsweise durch einen Gleitlack oder eine Metallbeschichtung gebildet ist.

5. Längenkompensator nach einem der Ansprüche 3 oder 4,
**dadurch**
**gekennzeichnet, dass** die reibungsreduzierende Schicht durch Ringe oder ein Gewebe gebildet ist, wobei die reibungsreduzierende Schicht die Aussenmantelfläche des Ausgleichselements bildet.

6. Längenkompensator (1) nach einem der Ansprüche 1 bis 5, **dadurch gekennzeichnet, dass** die der Längenkompensator (1) ein Anschlagelement (11) aufweist, wobei das Anschlagelement (11) am einen Ende des Stützrohres (4) angeordnet ist.

7. Längenkompensator (1) nach einem der Ansprüche 1 bis 6, **dadurch gekennzeichnet, dass** das Stützrohr (4) von einer Isolationsschicht umfasst ist.

## Claims

1. Length compensator (1) for pipelines, preferably plastic pipelines containing two connecting components (2) made from plastic, a compensating element (3) made from an elastic material made from a thermoplastic elastomer (TPE), and a supporting pipe (4), wherein the compensating element (3) is arranged between the two connecting components (2) and the compensating element ends (8) are connected to the connecting components (2), wherein the outer lateral surface of the compensating element (3) is suitably encompassed by the inner lateral surface of the supporting pipe (4) around its entire circumference, wherein the supporting pipe (4) has a circular cross-sectional area and the compensating element (3) expands and contracts exclusively in the axial direction, wherein the connecting components (2) is connected to the respective compensating element end (8) by means of a material-fitting connection and specifically by means of butt welding, especially preferably by WNF welding, sleeve welding, or electric sleeve welding, or wherein the connecting components (2) and the compensating element are connected to one another in a two-component injection moulding process and a respective connecting component is injection moulded to the ends of the compensating element (3).

2. Length compensator (1) according to Claim 1, **characterized in that** the connecting components (2) are connected to the respective compensating element end (8) by means of a form-fitting and/or force-fitting connection.

3. Length compensator (1) according to one of the preceding claims, **characterized in that** a friction-reducing layer is arranged on the outer lateral surface of the compensating element (3), preferably the friction-reducing layer is formed by grease or oil, in particular PTFE or silicone.

4. Length compensator (1) according to Claim 3, **characterized in that** the friction-reducing layer is formed by dry lubrication, in particular a coating of the inner lateral surface of the supporting pipe (4) is preferably formed by an anti-friction coating or a metal coating.

5. Length compensator according to either of Claims 3 and 4, **characterized in that** the friction-reducing layer is formed by rings or a fabric, wherein the friction-reducing layer forms the outer lateral surface of the compensating element.

6. Length compensator (1) according to one of Claims 1 to 5, **characterized in that** the the length compensator (1) has a stop element (11), wherein the stop element (11) is arranged at an end of the supporting pipe (4).

7. Length compensator (1) according to one of Claims 1 to 6, **characterized in that** the supporting pipe (4) is encompassed by an insulation layer.

## Revendications

1. Compensateur de longueur (1) destiné à des canalisations, de préférence des canalisations en matière synthétique, contenant deux composants de raccordement (2) en matière synthétique, un élément de compensation (3) en matériau élastique en élastomère thermoplastique (TPE), et un tube de support (4), l'élément de compensation (3) étant disposé entre les deux composants de raccordement (2) et les extrémités d'élément de compensation (8) étant reliées aux composants de raccordement (2), la surface latérale extérieure de l'élément de compensation (3) étant entourée de manière ajustée par la surface latérale intérieure du tube de support (4) sur toute la circonférence, le tube de support (4) ayant une section transversale ronde et l'élément de compensation (3) se dilatant et se contractant exclusivement dans la direction axiale, les composants de raccordement (2) étant reliés à l'extrémité respective (8) de l'élément de compensation au moyen d'une liaison de matière, à savoir au moyen d'une soudure bout à bout, de manière particulièrement préférée avec une soudure sans cordon ni rainure, une soudure par raccord ou une soudure par raccord électrique, ou les composants de raccordement (2) et l'élément de compensation étant reliés l'un à l'autre par moulage par injection à deux composants et un composant de raccordement étant moulé sur les extrémités de l'élément de compensation (3).

2. Compensateur de longueur (1) selon la revendication 1, **caractérisé en ce que** les composants de raccordement (2) sont reliés à l'extrémité respective (8) de l'élément de compensation au moyen d'une liaison par complémentarité de formes et/ou en force.

3. Compensateur de longueur (1) selon l'une des revendications précédentes, **caractérisé en ce qu'**une couche de réduction de frottement est disposée sur la surface latérale extérieure de l'élément de compensation (3), de préférence la couche de réduction de frottement est formée par une graisse ou une huile, notamment du PTFE ou du silicone.

4. Compensateur de longueur (i) selon la revendication 3, **caractérisé en ce que** la couche de réduction de frottement est formée par lubrification à sec, notamment d'un revêtement de la surface latérale intérieure du tube de support (4), de préférence par un vernis de glissement ou un revêtement métallique.

5. Compensateur de longueur selon l'une des revendications 3 ou 4, **caractérisé en ce que** la couche de réduction de frottement est formée par des anneaux ou un tissu, la couche de réduction de frottement formant la surface latérale extérieure de l'élément de compensation.

6. Compensateur de longueur (1) selon l'une des revendications 1 à 5, **caractérisé en ce que** le compensateur de longueur (1) comporte un élément de butée (11), l'élément de butée (11) étant disposé à une extrémité du tube de support (4).

7. Compensateur de longueur (1) selon l'une des revendications 1 à 6, **caractérisé en ce que** le tube de support (4) est entouré d'une couche isolante.
